# EUROPÄISCHE PATENTSCHRIFT

(11) **EP 0 243 912 B1**
(45) Veröffentlichungstag und Bekanntmachung des Hinweises auf die Patenterteilung: **17.03.1993**
(21) Anmeldenummer: 87106049.7
(22) Anmeldetag: 25.04.1987
(51) Int. Cl.: E04B 1/76, E04C 2/54

(54) **Wand-; Fenster- und/oder Brüstungselement**
Wall, window, and/or parapet element
Elément mur, fenêtre et/ou parapet

(30) Priorität: 02.05.1986 DE 3614978
(43) Veröffentlichungstag der Anmeldung: 04.11.1987
(73) Patentinhaber: Kunert, Heinz, Dr., 50935 Köln (DE)
(72) Erfinder: Kunert, Heinz, Dr., 50935 Köln (DE)

(56) Entgegenhaltungen:
- EP-A- 0 099 149
- EP-A- 0 110 221
- DE-A- 2 559 342
- DE-A- 2 906 259
- DE-A- 3 016 241
- DE-C- 824 248
- BILD DER WISSENSCHAFT Heft 2, Februar 1983, Seiten 106-110, W.KNAPP:"Die Sonnenfalle"

## Beschreibung

Die Erfindung bezieht sich auf ein Wand-, Fenster- und/oder Brüstungselement mit einer Dämmschicht aus einem die konvektive Wärmeübertragung und die Wärmestrahlung reduzierenden, für das solare Strahlungsspektrum aber durchlässigen Material und mit zwei die Dämmschicht zwischen sich aufnehmenden Platten, aus einer für das solare Strahlungsspektrum durchlässigen Materialstruktur.

Aus der DE-A-2 906 259 ist eine in Sandwichbauweise ausgeführte Wandbauplatte bekannt, die als Wand-, Brüstungs- oder Fensterelement Verwendung finden kann. Es handelt sich dabei um eine lichtdurchlässige Wärmedämmplatte mit zwei Deckplatten und einer zwischen diesen aufgenommenen Zwischenfüllung. Die Deckplatten bestehen aus transparentem Kunststoff, wie Polystyrol, und die Zwischenfüllung aus Transparentschaumstoff, wie Phenol-Formaldehyd. Bei dieser Wandbauplatte wird das gerichtet einfallende Sonnenlicht an der Zwischenfüllung vielfach reflektiert und tritt dann als diffuses, nicht blendendes Streulicht auf der anderen Seite der Wandbauplatte aus.

Unbefriedigend bei dieser Wandbauplatte ist deren begrenzte Temperaturbeständigkeit. Die einfallende Solarstrahlung wird durch die Vielfachreflektion bei der Durchstrahlung der Zwischenfüllung teilweise absorbiert. Ferner sind die verwendeten Werkstoffe für die Solarstrahlung insbesondere im ultravioletten und infraroten Bereich des solaren Spektrums nicht völlig durchgängig, so daß infolge Absorption der Solarstrahlung bei intensiver Sonneneinstrahlung, hohen Umgebungstemperaturen und einer gegebenenfalls auf der von der Einstrahlseite abgewandten Seite auftretenden Rückstrahlung Temperaturen von über 100°C in der Zwischenfüllung auftreten können. Derart hohe Temperaturen führen bei längerer Einwirkungsdauer zu einer unerwünschten Versprödung des Materials der als Dämmschicht eingesetzten Zwischenfüllung und zur Beeinträchtigung der Formstabilität des Wandelements bis hin zu Brüchen der die Zwischenfüllung beidseitig einschließenden Deckelelemente bei übermäßigem Wärmestau.

Ferner ist aus der DE-A-3 016 241 eine wärmeisolierende und lichtdurchlässige Mehrschichtplatte mit zwei Scheiben und einem zwischen diesen aufgenommenen Gitter aus einem Elastomer bekannt. In den Feldern des Gitters können lichtdurchlässige Gerüstbausteine angeordnet sein, etwa in Form aneinander gereihter dünnwandiger Kapillaren. Bei dieser Mehrschichtplatte beruht das Wärmedämmvermögen auf der Unterdrückung der konvektiven Wärmeübertragung, indem der Raum zwischen den Scheiben durch Gitter-, Kapillar- oder aus Schaumstrukturen mit jeweils lichtdurchgängigen Wandflächen in eine Vielzahl von lufteinschließenden Kleinsträumen aufgeteilt ist.

Auch bei der Mehrschichtplatte der zuletztgenannten Vorveröffentlichung handelt es sich um eine lichtdurchlässige Wärmedämmplatte, deren das Gitter zwischen sich aufnehmende Scheiben im Hinblick auf das Reflektions- und/oder Absorptionsverhalten gegenüber Licht mit selektiv wirkenden Beschichtungen versehen sein können und die hohe Stabilitätseigenschaften gegen Ultraviolett-Einstrahlung haben soll. Eine merkliche Schutzwirkung gegen übermäßige Erwärmung ist durch diese Maßnahmen jedoch nicht erreichbar, weil der ultraviolette Anteil des solaren Energiespektrums weniger als 5% beträgt.

Gegenüber diesem Stande der Technik liegt der Erfindung die Aufgabe zugrunde, ein Element der eingangs genannten Art und Zweckbestimmung so auszubilden, daß einerseits die Dämmschicht vor übermäßiger Erwärmung durch solare Strahlung und damit das Element gegen Beeinträchtigungen seiner Formstabilität und Funktion dauerhaft wirksam geschützt ist und andererseits der Durchgang insbesondere langwelliger Wärmestrahlung von der einen Seite des Elements zur anderen Seite merklich reduziert wird.

Gelöst ist diese Aufgabe erfindungsgemäß dadurch, daß bei dem Wand-, Fenster- und/oder Brüstungselement nach dem Oberbegriff des Patentanspruchs 1 eine der die Dämmschicht begrenzenden Platten als hohes Absorptionsvermögen vornehmlich für den nicht sichtbaren Bereich des solaren Strahlungsspektrums aufweisende Absorptionsplatte ausgebildet und auf der zur Dämmschicht hinweisenden Seite mit einer die Emission der Wärmestrahlung mindernden Schicht versehen ist, daß diese Schicht sich unter Ausbildung eines Luftspalts im Abstand von der Dämmschicht erstreckt und daß das Element in einem Rahmen um 180° schwenkbar gelagert und dadurch wahlweise mit der Absorptionsplatte nach außen zur Einstrahlseite oder zu einem Innenraum hinweisend einstellbar ist.

Bei der Erfindung handelt es sich somit nicht nur um ein transparentes Wärmedämmelement, wie bei dem vorerwähnten Stande der Technik, sondern um ein höchst wirksames Sonnenschutzelement, dessen vorgeschaltete Absorptivscheibe je nach Auslegung einen Anteil bis durchaus 50% der einfallenden Solarstrahlung zu absorbieren vermag, wenn die Absorptivscheibe sich auf der Einstrahlseite der Dämmschicht befindet. Die dadurch in der Absorptivscheibe, die bei bestimmungsgemäßer Verwendung im Sommerbetrieb die Außenscheibe bildet, absorbierte Quote der Solarstrahlung wird infolge der die Wärmestrahlung emissionsmindernden Beschichtung auf der dem Dämminlett zugewandten Seite fast ausschließlich konvektiv und über Wärmestrahlung nach außen abgeführt. Die absorbierte solare Energiequote vermag somit weder als kurzwellige solare Strahlungsenergie noch als in der Scheibe umgesetzte langwellige Wärmestrahlung die Dämmschicht zu transmittieren und durch das erfindungsgemäße Plattenelement hindurch in einen von letzterem nach außen abgeschlossenen Raum eines Gebäudes einzufallen.

Notwendig führt dies nicht nur zu einer erheblichen Reduzierung der Energielasten für die im Zwischenraum zwischen den beiden Scheiben angeordnete Dämmschicht, sondern gleichzeitig zu einer verminderten Einstrahlung von solarer Energie in einen Gebäudeinnenraum und insofern zu einer Einsparung von Kühllasten.

Da die Absorptionsscheibe vornehmlich die spektralen Anteile außerhalb des sichtbaren Bereichs des solaren Energiespektrums absorbiert, wird durch das erfindungsgemäße Plattenelement der Lichtdurchtritt und damit der Lichteintritt in ein mittels eines derartigen Plattenelementes nach außen abgeschlossenes Gebäude nur unwesentlich behindert. Der herkömmlichen Sonnenschutzverglasungen anhaftende Nachteil einer erheblichen Minderung der Lichttransmission ist somit vermieden.

Charakteristisches Merkmal der Erfindung ist, daß diese sich des Prinzips der ausschließlichen Absorption vornehmlich der nicht sichtbaren Anteile des solaren Spektrums bedient, nicht aber von dem an sich naheliegenden Prinzip der reflektiven Abwehr von Sonnenstrahlung durch entsprechende Glasbeschichtungen Gebrauch macht. Im Gegensatz zum Reflektionsprinzip führt das Absorptionsprinzip zu keiner direkten Abstrahlung kurzwelliger energiereicher Sonnenstrahlung auf naheliegenden Bewuchs oder, was grundsätzlich unzulässig wäre, auf gegenüberliegende Häuserfronten. Die absorbierte Solarenergie wird vielmehr in Form langwelliger Wärmestrahlung oder auch konvektiv abgeführt, ohne Umweltschäden zu verursachen.

Neben der emissionsmindernden Beschichtung der dem Dämminlett zugewandten Seite der Absorptionsscheibe kommt dabei besondere Bedeutung dem Merkmal zu, daß diese Beschichtung unter Ausbildung möglichst wenig unterbrochener Luftspalte im Abstand von der Dämmschicht angeordnet ist, weil Voraussetzung für die Wirksamkeit derartiger Beschichtungen das Angrenzen an Luftschichten ist, also an Schichten, die für Wärmestrahlung transmissiv sind.

Ein weiterer bestimmungsgemäßer Vorteil des erfindungsgemäßen Elements, das als Wand-, Fenster- und/oder Brüstungselement zum Abschließen von Gebäuderäumen nach außen dient, besteht in der schwenkbaren Anlenkung so, daß die Absorptionsplatte wahlweise in eine nach außen oder zu dem abgeschlossenen Raum hinweisende Lage gebracht werden kann.

Auf diese Weise lassen sich besonders günstige wirtschaftliche Klimatisierungswirkungen an Gebäuden erzielen, da bei der Anwendung mit nach außen weisender Absorptionsplatte die Energieeinstrahlung in einen Raum wirksam reduziert, hingegen bei rauminnenseitiger Absorptionsplatte die Wärmeabstrahlung von innen nach außen weitgehend unterbunden wird. Bei zum Rauminneren hinweisender Absorptionsplatte findet zudem ein weitgehend ungehinderter Energietransfer der gensamten auf ein Scheibenelement auftreffenden solaren Strahlenmenge in den Innenraum statt; also auch der in der nunmehr raumzugewandten Absorptionsscheibe in Wärme gewandelten Teilmenge in Form langwelliger Wärmestrahlung. Für den Winterbetrieb bedeutet das eine fast verlustlose Nutzung der auf den Scheibenkörper auftreffenden Sonnenstrahlung für die Raumheizung. Bei einer derartigen Verwendung bildet das erfindungsgemäße Element gewissermaßen ein mechanisch schaltbares Ventil zur Steuerung des solaren Strahlungsflusses eines zugleich wärmedämmenden transluzenten Bauelements.

Bei der Verwendung des Elements mit zur Einstrahlseite hinweisender Absorptivscheibe, also im Sommerbetrieb, wird eine zerstörende überwärmung der Dämmschicht einerseits durch Reduktion der einfallenden Sonneneinstrahlung mittels der der Dämmschicht vorgesetzten Filterscheibe verhindert, die für die Solarstrahlung im sichtbaren Bereich gute Transmissionswerte aufweist, im ultravioletten und im nahen infraroten Bereich des Solarspektrums jedoch stark absorbierend wirkt, andererseits aber auch durch die unter Ausbildung eines Luftspalts im Abstand von der Dämmschicht angeordnete und für Wärmestrahlung emissionsmindernde Schicht, bei der es sich insbesondere um eine sogenannte Low-E-Schicht handeln kann, wie beispielsweise Metalloxid- oder Halbleiterschichten.

Die Verwendung sogenannter Absorptionsgläser ist nach dem Aufsatz "Sonnenreflektionsglas für den Hochbau" in der DE-Zeitschrift "Architektur + Wohnwelt 6/75", Seite 430, bei Doppelglasfenstern zwar schon bekannt, aber nach diesem Aufsatz bei klimatisierten Räumen unwirtschaftlich, weil der in einer derartigen Scheibe absorbierte Energieanteil der einfallenden Solarstrahlung durch langwellige Abstrahlung und konvektiv an die Außenluft und an den Innenraum abgegeben wird. Bei über der Raumtemperatur liegender Außentemperatur fließt somit notwendig ein beträchtlicher und mit der Differenz zwischen Innen- und Außentemperatur steigender Anteil der in der Scheibe absorbierten Sonnenenergie in den Innenraum und muß von der klimatisierten Raumluft abgeführt werden. Auch vermag diese Literaturstelle keinerlei Anregung für die Elementausbildung als wahlweise mit seiner einen oder anderen Seite nach außen weisendes Ventil für die Steuerung des solaren Strahlenflusses zu geben.

Weitere Ausgestaltungen der Erfindung sind in den nachgeordneten Patentansprüchen 2 bis 22 angegeben.

So kann nach einer Weiterbildung des erfindungsgemäßen Elements die Absorptionsplatte eine im Kern eingefärbte Glasscheibe sein. Derartige Glasscheiben absorbieren über 50% der solaren Energiestrahlung bei Transmissionswerten von etwa 80% der Lichtstrahlung. Die solare Energiestrahlung auf die Dämmschicht kann somit mehr als halbiert werden.

Gleichfalls gemäß einer Weiterbildung des erfindungsgemäßen Elements kann die Absorptionsplatte aus opakem Werkstoff bestehen und mit über ihre Fläche verteilten Lochungen oder Ausstanzungen versehen sowie an ihrer Unterseite mittels einer zusätzlichen Glasplatte abgedeckt sein.

Eine andere Weiterbildung der Erfindung sieht vor, daß die Dämmschicht mit höchstens 20% ihrer zur Absorptionsplatte hinweisenden Seite auf der innenseitigen Schicht der Absorptionsplatte aufliegt. Die eine Wärmeabstrahlung hemmende Schicht, die auf der zum Dämminlett hinweisenden Seite der Absorptionsplatte angeordnet ist, liegt dann mit dem weitaus überwiegenden Teil ihrer Fläche an einer die Wirksamkeit dieser Schicht sichernden Luftschicht an.

Alternativ zu der vorgenannten Weiterbildung kann aber auch die der Absorptionsplatte zugewandte Seite der Dämmschicht eine gleichmäßig über ihre gesamte Fläche verteilte Strukturierung aufweisen, wobei wiederum sichergestellt sein muß, daß der weitaus überwiegende Teil einer die Wärmestrahlung hemmenden Innenschicht der Absorptionsplatte an Luft anliegt. Die der Absorptionsplatte zugewandte Seite der Dämmschicht kann aber auch aus gleichmäßig über die Fläche erhabenen reliefartigen Flächenteilen bestehen, die mit der Absorptionsplatte bzw. deren innenseitiger Beschichtung mittels Kleber verbunden sind.

Im Interesse einer verbesserten Wärmeabfuhr von der Absorptionsplatte nach der vom Dämminlett abgewandten Seite, also nach außen, hat sich als vorteilhaft erwiesen, wenn die Absorptionsplatte auf ihrer Außenseite eine durch reliefartig vorstehende Flächenteile vergrößerte Oberfläche besitzt. Dabei können die vorstehenden Flächenteile der Absorptionsplatte aus gleichmäßig angeordneten Halbkugeln, waagerecht angeordneten und im Querschnitt teilzylindrischen Erhebungen oder auch keilförmigen Prismen bestehen, wobei die kürzeren Seitenflächen der Prismen mit Vorteil etwa senkrecht zur Sonneneinstrahlung ausgerichtet und zweckmäßigerweise mit einer stark absorbierende Eigenschaften aufweisenden Beschichtung versehen sein sollten.

Die Dämmschicht des erfindungsgemäßen Elements kann aus vielfältigen Werkstoffen und/oder Strukturen bestehen, so beispielsweise aus einer lichtdurchlässigen Schaumstoffstruktur oder aus lichtdurchlässigen Kapillar- oder auch Kunststoffhohlkammerstrukturplatten. Die Dämmschicht kann aber auch aus Aerogel-Werkstoffstrukturen, planparallelen Folien oder Platten aus organischen oder anorganischen Werkstoffen bzw. aus Faserplatten organischen oder anorganischen Materials bestehen, wobei all diese Strukturen und Werkstoffe lichtdurchlässig sein müssen. Bei einer Dämmschicht aus einer oder mehreren planparallelen Folien oder Platten aus organischen und anorganischen Werkstoffen wird eine besondere Wirksamkeit der Dämmschicht erreicht, wenn diese Folien oder Platten ein- oder beidseitig mit einer die Wärmestrahlung reflektierenden Schicht belegt sind.

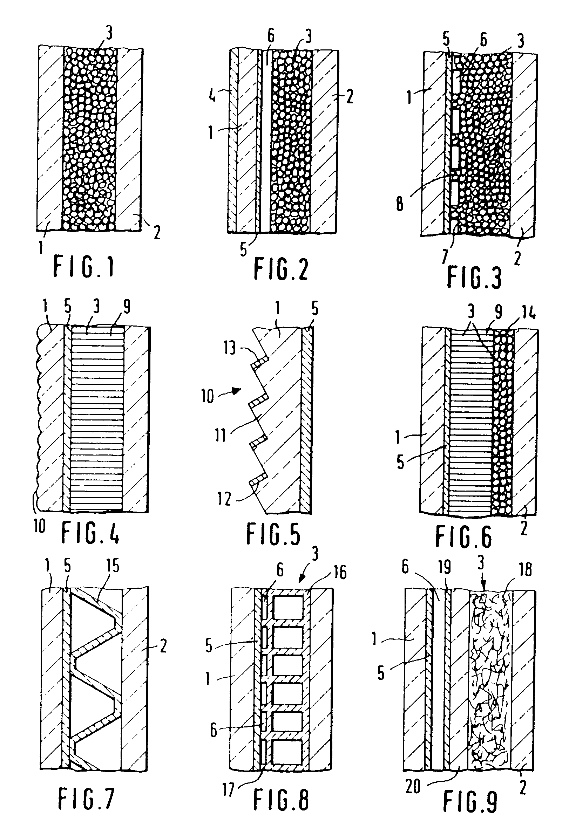

In den Fig. 1 bis 13 der beigefügten Zeichnung sind mehrere Ausführungsformen des erfindungsgemäßen Wand-, Fenster- und/oder Brüstungselements schematisch dargestellt, die nachstehend erläutert werden sollen:
Bei dem in Fig. 1 veranschaulichten Ausführungsbeispiel der Erfindung handelt es sich um ein besonders einfach ausgebildetes Wandelement, das aus einer äußeren Platte 1 und einer inneren Platte 2 aus lichtdurchlässigem organischen oder anorganischen Material sowie aus einer zwischen den vorgenannten Platten befindlichen lichtdurchlässigen Dämmschicht 3 mit stark wärmedämmenden Eigenschaften besteht. Bei der lichtdurchlässigen Dämmschicht 3 kann es sich beispielsweise um eine Füllung aus Silicia-Aerogel-Pellets handeln.

Die äußere Platte 1 hat gegenüber der inneren Platte 2 wesentlich höhere Absorptionseigenschaften für den Ultraviolett- und Infrarotbereich der solaren Strahlung. Dabei sind die absorbierenden Substanzen über die gesamte Dicke der Platte, die nachstehend auch als "Absorptionsplatte" bezeichnet wird, homogen eingelagert. Die Platte 2 hingegen soll ein möglichst hohes Transmissionsvermögen für den gesamten Bereich der Solarstrahlung aufweisen.

Bei dem Wandelement nach Fig. 2 vermittelt eine Beschichtung 4 der Platte 1, die auf letzterer auf der vom Dämminlett 3 abgewandten Seite angeordnet ist, die geforderten Absorptionseigenschaften.

Bei der Ausführungsform nach Fig. 2 ist ferner die Absorptionsplatte 1 auf der zur Dämmschicht hinweisenden Seite mit einer für langwellige Wärmestrahlung geringes Immissionsvermögen aufweisenden Beschichtung 5 ausgerüstet. Bei dieser Beschichtung handelt es sich um eine sogenannte "Low-E-Schicht", die für das solare Spektrum möglichst vollständig lichtdurchlässig ist und für den fernen Infrarotbereich ein möglichst geringes Emissionsvermögen aufweist. Bei der Dämmschicht 3 kann es sich um einen lichtdurchlässigen Schaumstoff handeln. Zwischen der Absorptionsplatte 1 und der Dämmschicht 3 ist ein die Wirksamkeit der Low-E-Beschichtung gewährleistender Luftspalt 6 vorgesehen.

Bei der in Fig. 3 veranschaulichten Ausführungsform besitzt die Absorptionsplatte 1 auf der zur Dämmschicht 3 hinweisenden Seite eine dreidimensional strukturierte Oberfläche 7 mit beabstandet voneinander vorstehenden Bereichen 8, die mit der rückseitigen Beschichtung 5 der Absorptionsplatte 1 verklebt sind. Im übrigen erstreckt sich Im übrigen erstreckt sich zwischen der Beschichtung 5 und der Dämmschicht 3 ein Luftspalt 6. Die Platte 2 hingegen ist mit der anderen Seite der Dämmschicht 3 unmittelbar verklebt.

Bei der in Fig. 4 dargestellten Ausführungsform besteht die Dämmschicht 3 aus einer lichtdurchlässigen Kapillarstrukturplatte 9 mit senkrecht zu den Platten 1 und 2 stehenden röhrenförmigen Hohlkörpern geringer Wandstärke. Diese Hohlkörper sind zur Absorptionsplatte 1 hin offen. Die Low-E-Beschichtung 5 der Absorptionsplatte 1 wird mithin nur von den dünnwandigen Rändern der Hohlkörper berührt, zwischen denen hinreichend große Luftspalte für die Gewährleistung der Wirksamkeit der genannten Beschichtung vorhanden sind. Die von der Dämmschicht 3 abgewandte Außenseite der Absorptionsplatte 1 weist eine vergrößerte strukturierte Oberfläche 10 auf, die aus verschiedenen geometrischen Formen bestehen, beispielsweise auch geriffelt sein kann. Die vergrößerte Oberfläche 10 der Absorptionsplatte 1 vermittelt eine verbesserte Abfuhr der in der Absorptionsplatte aufgenommenen Strahlungswärme.

Fig. 5 veranschaulicht in einer vergrößerten Darstellung eine alternative Ausbildung der Oberfläche 10, der Absorptionsplatte 1. Diese vergrößerte Oberfläche kann aus regelmäßig angeordneten Halbkugeln oder waagerechten zylindrischen Erhebungen bestehen. Bei der Ausführungsform nach Fig. 5 sind waagerecht verlaufende, im Querschnitt keilförmige Prismen 11 vorgesehen, deren innere Seitenflächen 12 in Richtung auf die Sonneneinstrahlung weisen. Zweckmäßigerweise sind diese Seitenflächen mit Beschichtungen 13 aus stark absorbierendem und gegebenenfalls auch reflektierende Eigenschaften aufweisendem Material belegt.

Bei der Ausführungsform nach Fig. 6 besteht die Dämmschicht 3 auf der zur Absorptionsplatte hinweisenden Seite aus einer Röhrenstruktur 9 und auf der von der Absorptionsplatte 1 abgewandten und zur Platte 2 hinweisenden Seite aus Silicia-Aerogel-Pellets 14.

Die Dämmschicht 3 kann aber auch, wie Fig. 7 zeigt, aus einer tiefgezogenen, regelmäßig dreidimensional strukturierten hoch durchlässigen Folie bzw. Folienplatte 15 bestehen, die zwischen den beiden Platten 1, 2 aufgenommen und mit diesen verklebt ist.

Als Dämmschicht 3 können aber auch eine oder mehrere planparallel angeordnete Folien bzw. Folienplatten aus organischem oder anorganischem Material eingesetzt werden, die im Interesse einer besseren Dämmung der Wärmestrahlung ein- oder auch beidseitig mit die Wärmestrahlung reflektierenden Schichten ausgerüstet sein können.

Bei der Ausführungsform nach Fig. 8 ist die Dämmschicht 3 als Hohlkammerplatte 16 ausgebildet. Die Dämmschicht 3 weist auf ihrer der Absorptionsplatte 1 zugewandten Seite vorstehende Rippen oder Noppen 17 auf, die unter Ausbildung von Luftspalten 6 in den zwischen den Rippen oder Noppen liegenden Bereichen mittels Kleber mit der Absorptionsplatte 1 bzw. deren Beschichtung 5 auf der zur Dämmschicht hinweisenden Seite verbunden sind. Auf der von der Absorptionsplatte abgewandten Seite ist die Dämmschicht 3 mit der Platte 2 ohne Luftspalt verklebt.

Die in Fig. 9 veranschaulichte Ausführungsform besitzt eine Dämmschicht 3 aus einem strukturierten, anorganischen oder organischen Fasergewebe oder Faserfließ 18 und aus einer der Absorptionsplatte 1 zugewandten Weißglasscheibe 20, die ebenfalls auf der zur Absorptionsplatte hinweisenden Seite mit einer Low-E-Schicht 19 versehen ist. Die Low-E-Schicht 19 der Weißglasscheibe 20 erstreckt sich unter Ausbildung eines Luftspaltes 6 im Abstand von der Absorptionsplatte 1 bzw. der mit dieser auf der zur Dämmschicht hinweisenden Seite verbundenen Beschichtung 5.

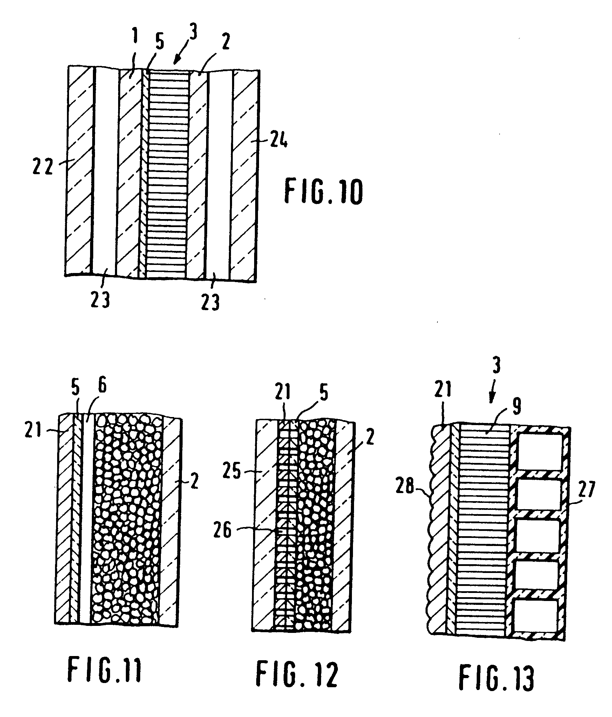

Fig. 10 zeigt eine Ausführungsform, bei der ein Wandelement der oben in Verbindung mit den Fig. 1 bis 8 erläuterten Art unter Ausbildung von Luftspalten 23 bildenden Zwischenräumen zwischen zwei äußeren Weißglasscheiben 22, 24 angeordnet ist. Das Wandelement kann auch in einer um 180° verschwenkten Lage zwischen den äußeren Weißglasscheiben aufgenommen sein, so daß die Absorptionsplatte 1 zur Weißglasscheibe 24 und die Platte 2 des Wandelements zur Weißglasscheibe 22 hinweist.

Bei der Ausführungsform nach Fig. 11 besteht die Absorptionsplatte 21 aus opakem Werkstoff. Die Absorptionsplatte 21 ist auf der zur Dämmschicht hinweisenden Seite mit einer Beschichtung 5 versehen, die sich unter Ausbildung eines Luftspaltes 6 im Abstand von der Dämmschicht erstreckt.

In Fig. 12 ist eine Weiterbildung der Ausführungsform nach Fig. 11 veranschaulicht, bei der die aus opakem Werkstoff bestehende Absorptionsplatte 21 mit regelmäßig über ihre Oberfläche verteilten Bohrungen bzw. Ausnehmungen 26 versehen ist. Auf der von der Dämmschicht abgewandten Seite ist der aus opakem Werkstoff bestehenden Absorptionsplatte als Korrosionsschutz eine lichtdurchlässige Weißglasscheibe 25 vorgesetzt.

Auch bei der Ausführungsform nach Fig. 13 besteht die Absorptionsplatte aus einer opaken Platte 21, deren Oberfläche 28 auf der von der Dämmschicht 3 abgewandten Seite durch dreidimensionale Strukturen vergrößert ist. Anstelle einer aus Glas bestehenden Platte 2 auf der anderen Seite der Dämmschicht ist bei dieser Ausführungsform eine lichtdurchlässige Kunststoffstegplatte 27 vorgesehen, die mit der aus einer Kapillarstrukturplatte 9 gebildeten Dämmschicht 3 verklebt ist. Die vergrößerte Oberfläche 28 dient auch hier der besseren Wärmeabgabe an die Umgebungsluft.

Die als Ausführungsformen der Erfindung vorstehend beschriebenen Wandelemente sollen erfindungsgemäß als Schwenkelemente dergestalt Verwendung finden, daß beispielsweise im Sommerbetrieb die Absorptionsschicht zur Einstrahlseite weist, im Winterbetrieb hingegen zu einem mittels eines derartigen Wandelements nach außen abgeschlossenen Raum. Demgemäß vermögen derartige Elemente im Sommerbetrieb einen wirksamen Schutz gegen äußere solare Wärmeeinwirkungen zu vermitteln, im Winterbetrieb hingegen Schutz vor unerwünschten Wärmeverlusten bei voller Nutzung der von außen auf das Element auftreffenden solaren Strahlungsenergie zur Raumheizung. Die solare Strahlungsenergie fällt zu einem Teil als das Element durchdringende direkte Strahlung in den Raum ein, zum anderen Teil von der nunmehr raumwärts liegenden Absorptionsplatte als Wärmestrahlung.

## Patentansprüche

1. Wand-, Fenster- und/oder Brüstungselement mit einer Dämmschicht aus einem die konvektive Wärmeübertragung und Wärmestrahlung reduzierenden, für das solare Strahlungsspektrum durchlässigen Material und mit zwei die Dämmschicht zwischen sich aufnehmenden Platten aus einer für das solare Strahlungsspektrum durchlässigen Materialstruktur,
dadurch gekennzeichnet,
daß eine der die Dämmschicht (3) begrenzenden Platten als hohes Absorptionsvermögen vornehmlich für den nicht sichtbaren Bereich des solaren Strahlungsspektrums aufweisende Absorptionsplatte (1, 21) ausgebildet und auf der zur Dämmschicht hinweisenden Seite mit einer die Emission der Wärmestrahlung mindernden Schicht (5) versehen ist, daß die Schicht (5) sich unter Ausbildung eines Luftspaltes (6) im Abstand von der Dämmschicht (3) erstreckt und daß das Element in einem Rahmen um 180° schwenkbar gelagert und dadurch wahlweise mit der Absorptionsplatte (1) nach außen zur Einstrahlseite oder zu einem Innenraum hinweisend einstellbar ist.

2. Element nach Anspruch 1, dadurch gekennzeichnet, daß die Absorptionsplatte (1) eine im Kern eingefärbte Glasscheibe ist.

3. Element nach Anspruch 1 oder 2, dadurch gekennzeichnet, daß die Absorptionsplatte (21) aus opakem Werkstoff besteht und über ihre Fläche verteilt Lochungen oder Ausstanzungen (26) aufweist.

4. Element nach Anspruch 3, dadurch gekennzeichnet, daß die aus opakem Werkstoff bestehende Absorptionsplatte (21) an ihrer Außenseite durch eine zusätzliche Glasplatte (25) abgedeckt ist.

5. Element nach einem der Ansprüche 1 bis 4, dadurch gekennzeichnet, daß die Dämmschicht (3) mit höchstens 20% ihrer der Absorptionsplatte (1, 21) zugewandten Seite auf der letzterer zugeordneten Schicht (5) aufliegt.

6. Element nach einem der Ansprüche 1 bis 5, dadurch gekennzeichnet, daß die der Absorptionsplatte (1, 21) zugewandte Seite der Dämmschicht (3) eine gleichmäßig über ihre Gesamtfläche verteilte Strukturierung aufweist.

7. Element nach Anspruch 6, dadurch gekennzeichnet, daß die der Absorptionsplatte (1, 21) zugewandte Seite der Dämmschicht (3) gleichmäßig über die Fläche erhabene reliefartige Flächenteile (8) aufweist.

8. Element nach Anspruch 7, dadurch gekennzeichnet, daß die erhabenen Flächenteile (8) maximal 20% der Fläche der Dämmschicht (3) ausmachen.

9. Element nach Anspruch 7 oder 8, dadurch gekennzeichnet, daß die Absorptionsplatte (1, 21) mit den erhabenen Flächenteilen (8) der Dämmschicht (3) mittels Kleber verbunden ist.

10. Element nach einem der Ansprüche 1 bis 9, dadurch gekennzeichnet, daß die Absorptionsplatte (1 , 21) auf ihrer Außenseite eine durch reliefartig vorstehende Flächenteile vergrößerte Oberfläche (10, 28) aufweist.

11. Element nach Anspruch 10, dadurch gekennzeichnet, daß die vorstehenden Flächenteile der Absorptionsplatte (1, 21) aus gleichmäßig angeordneten Halbkugeln bestehen.

12. Element nach Anspruch 10, dadurch gekennzeichnet, daß die vorstehenden Flächenteile der Absorptionsplatte (1, 21) aus waagerecht angeordneten, im Querschnitt teilzylindrischen Erhebungen bestehen.

13. Element nach Anspruch 10, dadurch gekennzeichnet, daß die vorstehenden Flächenteile der Absorptionsplatte (1, 21) aus waagerecht angeordneten, im Querschnitt keilförmigen Prismen (11) bestehen.

14. Element nach Anspruch 13, dadurch gekennzeichnet, daß die kürzeren Seitenflächen (12) der Prismen (11) etwa senkrecht zur Sonneneinstrahlung angeordnet sind.

15. Element nach Anspruch 13 oder 14, dadurch gekennzeichnet, daß die kürzeren Seitenflächen (12) der Prismen (11) mit einer stark absorbierende Eigenschaften aufweisenden Beschichtung (13) versehen sind.

16. Element nach einem der Ansprüche 1 bis 15, dadurch gekennzeichnet, daß die Dämmschicht (3) in an sich bekannter Weise aus einer lichtdurchlässigen Kunststoff-Schaumstruktur besteht.

17. Element nach einem der Ansprüche 1 bis 15, dadurch gekennzeichnet, daß die Dämmschicht (3) aus lichtdurchlässigen Kapillarstrukturplatten (9) besteht.

18. Element nach einem der Ansprüche 1 bis 15, dadurch gekennzeichnet, daß die Dämmschicht (3) aus lichtdurchlässigen Kunststoffhohlkammerstrukturplatten (15, 16) besteht.

19. Element nach einem der Ansprüche 1 bis 15, dadurch gekennzeichnet, daß die Dämmschicht (3) aus lichtdurchlässigen Aerogel-Werkstoffstrukturen (14) besteht.

20. Element nach einem der Ansprüche 1 bis 15, dadurch gekennzeichnet, daß die Dämmschicht (3) aus einer oder mehreren lichdurchlässigen planparallelen Folien oder Platten aus organischen oder anorganischen Werkstoffen besteht.

21. Element nach Anspruch 20, dadurch gekennzeichnet, daß die Dämmschicht (3) aus lichtdurchlässigen Faserplatten (18) aus organischem oder anorganischen Werkstoff besteht.

22. Element nach einem der Ansprüche 1 bis 15, dadurch gekennzeichnet, daß die Dämmschicht (3) aus einer oder mehreren planparallelen Folien oder Platten aus organischen oder anorganischen Werkstoffen besteht, die ein- oder beidseitig mit einer die Wärmestrahlung reflektierenden Schicht belegt sind.

## Claims

1. Wall, window and/or railing element with an insulating layer of a material, which reduces the convective heat transmission and heat radiation and is permeable for the solar radiation spectrum, and with two plates, which receive the insulating layer between them, of a material structure which is permeable for the solar radiation spectrum, characterised thereby, that one of the plates bounding the insulating layer (3) is constructed as absorption plate (1, 21) displaying a high absorptive capacity predominantly for the non-visible range of the solar radiation spectrum and provided on the side facing the insulating layer with a layer (5) reducing the emission of the heat radiation, that the layer (5) extends at a spacing from the insulating layer (3) while forming an air gap (6) and that the element is borne in a frame to be pivotable through 180° and thereby selectably settable with the absorption plate (1) facing either outwardly towards the irradiated side or towards an interior space.

2. Element according to claim 1, characterised thereby, that the absorption plate (1) is a glass pane coloured in the core.

3. Element according to claim 1 or 2, characterised thereby, that the absorption plate (21) consists of opaque material and displays perforations or punched-out portions (26) distributed over its area.

4. Element according to claim 3, characterised thereby, that the absorption plate (21) consisting of opaque material is covered at its outward side by an additional glass plate (25).

5. Element according to one of the claims 1 to 4, characterised thereby, that the insulating layer (3) lies by at most 20% of its side facing the absorption plate (1, 21) on the layer (5) associated with the latter.

6. Element according to one of the claims 1 to 5, characterised thereby, that that side of the insulating layer (3), which faces the absorption plate (1, 21), displays a texturing distributed uniformly over its entire surface.

7. Element according to claim 6, characterised thereby, that that side of the insulating layer (3), which faces the absorption plate (1, 21), displays relief-like surface parts (8) protruding uniformly above the surface.

8. Element according to claim 7, characterised thereby, that the protruding surface parts (8) make up at most 20% of the area of the insulating layer (3).

9. Element according to claim 7 or 8, characterised thereby, that the absorption plate (1, 21) is connected with the protruding surface parts (8) of the insulating layer (3) by means of an adhesive substance.

10. Element according to one of the claims 1 to 9, characterised thereby, that the absorption plate (1, 21) on its outward side displays a surface (10, 28) enlarged by surface parts protruding in the manner of a relief.

11. Element according to claim 10, characterised thereby, that the protruding surface parts of the absorption plate (1, 21) consist of uniformly arranged hemispheres.

12. Element according to claim 10, characterised thereby, that the protruding surface parts of the absorption plate (1, 21) consist of horizontally arranged protrusions which are partly cylindrical in cross-section.

13. Element according to claim 10, characterised thereby, that the protruding surface parts of the absorption plate (1, 21) consist of horizontally arranged prisms (11) which are wedge-shaped in cross-section.

14. Element according to claim 13, characterised thereby, that the shorter side surfaces (12) of the prisms (11) are arranged about perpendicularly to the solar radiation.

15. Element according to claim 13 or 14, characterised thereby, that the shorter side surfaces (12) of the prisms (11) are provided with a coating (13) displaying strong absorptive properties.

16. Element according to one of the claims 1 to 15, characterised thereby, that the insulating layer (3) consists of a translucent synthetic foam material structure in an itself known manner.

17. Element according to one of the claims 1 to 15, characterised thereby, that the insulating layer (3) consists of translucent plates (9) of capillary structure.

18. Element according to one of the claims 1 to 15, characterised thereby, that the insulating layer (3) consists of translucent synthetic material plates (15, 16) of hollow chamber structure.

19. Element according to one of the claims 1 to 15, characterised thereby, that the insulating layer (3) consists of translucent structures (14) of aerogel material.

20. Element according to one of the claims 1 to 15, characterised thereby, that the insulating layer (3) consists of one or more translucent, parallelly planar foils or plates of organic or inorganic materials.

21. Element according to claim 20, characterised thereby, that the insulating layer (3) consists of translucent fibre plates (18) of organic or inorganic material.

22. Element according to one of the claims 1 to 15, characterised thereby, that the insulating layer (3) consists of one or more parallelly planar foils or plates of organic or inorganic materials, which are covered at one or both sides with a layer reflecting the heat radiation.

## Revendications

1. Elément de mur, fenêtre et/ou parapet, comportant une couche isolante en un matériau qui réduit le transfert de chaleur par convection et le rayonnement thermique, mais transparent au spectre du rayonnement solaire, et comportant deux plaques, qui reçoivent entre elles la couche isolante, et présentant une structure de matériau transparente au spectre du rayonnement solaire, caractérisé en ce que l'une des plaques délimitant la couche isolante (3) est conçue comme une plaque absorbante (1, 21), présentant un pouvoir d'absorption élevé, surtout pour la région non visible du spectre du rayonnement solaire et, sur le côté dirigé vers la couche isolante, est pourvue d'une couche (5) qui diminue l'émission du rayonnement thermique ; que la couche (5) s'étend, avec formation d'un interstice d'air (6), à une certaine distance de la couche isolante (3) ; et que l'élément est logé en pivotement sur 180° dans un cadre et de ce fait peut être ajusté, la plaque absorbante (1) pouvant être au choix dirigée vers l'extérieur vers le côté du rayonnement incident,ou vers le local intérieur.

2. Elément selon la revendication 1, caractérisé en ce que la plaque absorbante (1) est constituée d'une plaque de verre colorée dans la masse.

3. Elément selon la revendication 1 ou 2, caractérisé en ce que la plaque absorbante (21) est en un matériau opaque et présente des trous ou perforations (26) répartis sur sa surface.

4. Elément selon la revendication 3, caractérisé en ce que la plaque absorbante (21) constituée d'un matériau opaque est sur son côté extérieur revêtue d'une plaque de verre supplémentaire (25).

5. Elément selon l'une des revendications 1 à 4, caractérisé en ce que la couche isolante (3) s'appuie par au plus 20 % de son côté dirigé vers la plaque absorbante (1, 21) sur la couche (5) dirigée vers ce dernier.

6. Elément selon l'une des revendications 1 à 5, caractérisé en ce que le côté de la couche isolante (3) dirigé vers la plaque absorbante (1, 21) présente une structuration uniformément répartie sur toute sa surface.

7. Elément selon la revendication 6, caractérisé en ce que le côté de la couche isolante (3) dirigé vers la plaque absorbante (1, 21) présente des éléments de surface (8) en relief,uniformément répartis sur la surface.

8. Elément selon la revendication 7, caractérisé en ce que les éléments de surface en relief (8) comptent au plus pour 20 % de l'aire de la couche isolante (3).

9. Elément selon la revendication 7 ou 8, caractérisé en ce que la plaque absorbante (1, 21) est assemblée par un adhésif aux éléments de surface (8) en saillie de la couche isolante (3).

10. Elément selon l'une des revendications 1 à 9, caractérisé en ce que la plaque absorbante (1, 21) comporte sur son côté extérieur une surface (10, 28) dont l'aire est agrandie par des éléments de surface en relief.

11. Elément selon la revendication 10, caractérisé en ce que les éléments de surface en saillie de la plaque absorbante (1, 21) sont constitués de demi-sphères uniformément réparties.

12. Elément selon la revendication 10, caractérisé en ce que les éléments de surface en saillie de la plaque absorbante (1, 21) sont constitués de protubérances horizontales ayant en section transversale une forme partiellement cylindrique.

13. Elément selon la revendication 10, caractérisé en ce que les éléments de surface en saillie de la plaque absorbante (1, 21) sont constitués de prismes (11) horizontaux, ayant en section transversale la forme de coins.

14. Elément selon la revendication 13, caractérisé en ce que les surfaces latérales les plus courtes (12) des prismes (11) sont approximativement perpendiculaires à l'incidence du rayonnement solaire.

15. Elément selon la revendication 13 ou 14, caractérisé en ce que les surfaces latérales les plus courtes (12) des prismes (11) sont pourvues d'un revêtement (13) présentant des propriétés fortement absorbantes.

16. Elément selon l'une des revendications 1 à 15, caractérisé en ce que la couche isolante (3) est d'une manière connue en soi constituée d'une structure de mousse plastique transparente à la lumière.

17. Elément selon l'une des revendications 1 à 15, caractérisé en ce que la couche isolante (3) est constituée de plaques transparentes à structure capillaire (9).

18. Elément selon l'une des revendications 1 à 13, caractérisé en ce que la couche isolante (3) est constituée de plaques transparentes à la lumière (15, 16) ayant une structure en cavités plastiques.

19. Elément selon l'une des revendications 1 à 15, caractérisé en ce que la couche isolante (3) est constituée de structures (14) en un matériau aérogel transparent à la lumière.

20. Elément selon l'une des revendications 1 à 15, caractérisé en ce que la couche isolante (3) est constituée d'une ou plusieurs feuilles ou plaques, transparentes à la lumière et plan-parallèles, en un matériau organique ou minéral.

21. Elément selon la revendication 20, caractérisé en ce que la couche isolante (3) est constituée de plaques de fibres (18) transparentes à la lumière, en un matériau organique ou minéral.

22. Elément selon l'une des revendications 1 à 15, caractérisé en ce que la couche isolante (3) est constituée d'une ou plusieurs feuilles ou plaques plan-parallèles en des matériaux organiques ou minéraux, qui sont pourvus sur une ou deux faces d'une couche réfléchissant le rayonnement thermique.
